# EUROPEAN PATENT APPLICATION

(11) **EP 1 873 885 A1**
(43) Date of publication of application: **02.01.2008**
(21) Application number: 06445055.4
(22) Date of filing: 28.06.2006
(51) Int. Cl.: H02J 3/00

(54) **High voltage plant**

(71) Applicant: ABB Technology Ltd, 8050 Zürich (CH)
(72) Inventor: Aström, Urban, 72270 Saxdalen (SE)
(74) Representative: Estreen, Lars J.F.

(57) **Abstract**

A high voltage plant comprising capacitors, inductors, transformers, and switching units for transmission of high voltage electrical power, is provided in a building (26), wherein the capacitors are oil-less capacitors.

## Description

### FIELD OF INVENTION

The present invention relates generally to high voltage plants and more particularly to indoor high voltage plants comprising capacitors.

### BACKGROUND

High voltage plants are provided for example in electrical networks for distribution of electrical AC or DC power. These plants include for example converter stations arranged to convert the electrical power between different voltages or between AC and DC power.

High voltage capacitors are used in many high voltage plants, such as in filters in High Voltage Direct Current (HVDC) converter stations. In such stations, power is transformed between an AC voltage and a DC voltage. The DC voltage can be as high as 600 kV or even 800 kV, imposing strict demands on the functionality of the converter station.

High voltage capacitors designs have traditionally used impregnated PP-film as the dielectric material. This kind of capacitors is known as "wet" capacitors, referring to the fact that oil is used as part of the capacitor device.

Due to their size and for cost reasons, high voltage plants, such as HVDC converter stations, have traditionally been provided outdoors without any considerable protective housing. However, due to pollution, sabotage threats etc. there is today a desire to provide these kinds of plants indoors. This is particularly important for DC applications, wherein the isolation problems due to pollution and moisture are generally worse than in AC applications.

### SUMMARY OF THE INVENTION

An object of the present invention is to provide a high voltage plant, which is less vulnerable to external hazards.

The invention is based on the realization that by replacing wet capacitors with oil-less capacitors in high voltage applications, it will be possible to provide high voltage plants indoors in a protective house while maintaining required levels of protection against fire and other hazards.

According to a first aspect of the present invention there is provided a high voltage plant as defined in appended claim 1.

According to a second aspect of the present invention there is provided a use of oil-less capacitors in indoor high voltage plants as defined in appended claim 6.

Further preferred embodiments are defined by the dependent claims.

Thus there is provided a high voltage plant, which is less vulnerable to external hazards while stringent building regulations are adhered to. This is achieved by combining an indoor high voltage plant with the use of dry or oil-less capacitors.

### BRIEF DESCRIPTION OF DRAWINGS

The invention is now described, by way of example, with reference to the accompanying drawings, in which:
Fig. 1 is an overall view of a converter station comprising a high voltage plant according to the invention;
Fig. 2 is a diagram showing the configuration of part of a high voltage station according to the invention; and
Fig. 3 shows a dry capacitor used in a high voltage plant.

### DETAILED DESCRIPTION OF PREFERRED EMBODIMENTS

In the following a detailed description of a preferred embodiment of the present invention will be given. Throughout this description, the term "high voltage" is used for DC voltages of at least 300 kV.

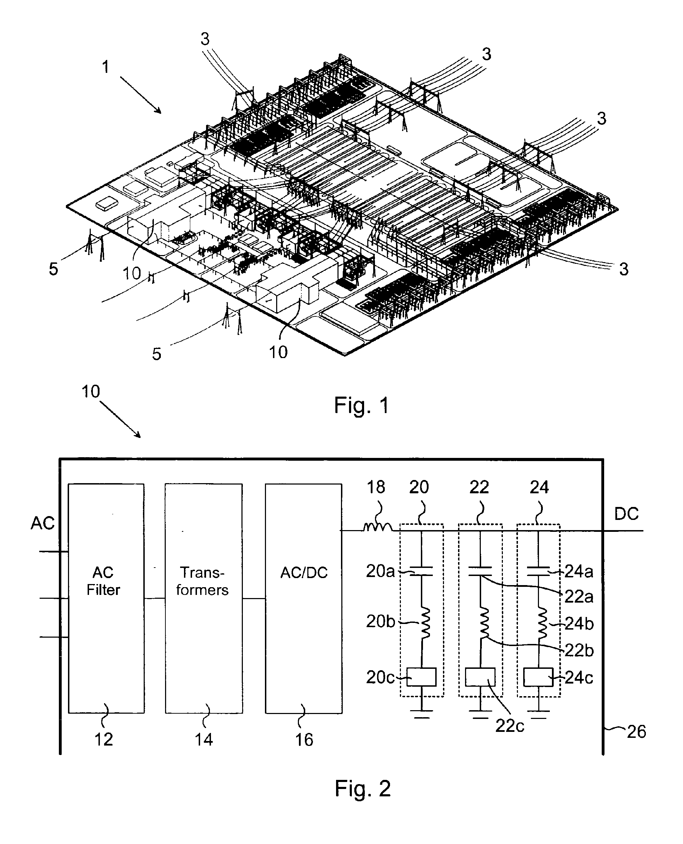

In Fig. 1 there is shown a High Voltage Direct Current (HVDC) station, generally designated 1, which is arranged to convert DC power to AC power and vice versa in an HVDC system. The station thus comprises two distinct parts or sides, an AC side shown in the upper right portion of the plant and a DC side shown in the lower left portion of the plant. Three phase AC lines 3 are connected to the AC side and two pole DC lines 5 are connected to the DC side.

In Fig. 1 there are shown a converter plant 10, comprising two poles. This converter plant comprises the components required for converting between AC and DC power, such as capacitors, inductors, transformers, and switching units. In this converter plant the electrical power is converted between the AC power on the AC lines 3 and the DC power on the DC lines 5.

A simplified overall diagram of one pole of the converter plant 10 is shown in Fig. 2. This diagram shows only one pole of the DC side; it will be appreciated that the components described in the following will be provided for the both poles.

To the left in the figure, three AC lines are shown entering an AC switch yard including AC filters 12. These AC filters eliminate or at least diminishes unwanted components in the AC voltages, and prevent particularly the odd harmonic currents from spreading out on the AC system. A transformer block 14 is provided in order to provide to the DC side a desired voltage and to provide electrical insulation between the AC and DC sides of the converter station.

A converter, i.e., AC/DC block 16, is connected to the transformer block. This AC/DC block contains suitable thyristor bridges, such as 12-pulse bridges, as is conventional in order to convert between electrical AC and DC power.

The AC/DC block 16 provides no perfect DC voltage. A smoothing reactor 18 is shown in the DC pole line connected to the AC/DC block to reduce the AC component superimposed on the DC component.

After the smoothing reactor 18 there are provided three filters between the DC pole line and ground and these filters will now be discussed. The first filter 20 is a so-called harmonics filter, which is arranged to reduce harmonics in the voltage interfering with telecommunication. With a 12-pulse converter, the harmonics are the 12, 24, 36 etc. harmonics, in a 50 Hz system corresponding to 600, 1200, 1800 etc. Hz.

The second filter 22 is a so-called Power Line Carrier (PLC) filter, arranged to prevent noise from interfering with PLC devices.

The third filter 24 is a Radio Interference (RI) filter arranged to eliminate voltages interfering with radio communication .

Each of these filters comprises a capacitor unit 20a, 22a, and 24a, respectively, an inductor unit 20b, 22b, and 24b, respectively, and a resistor unit 20c, 22c, and 24c, respectively.

All components, i.e., the capacitors, inductors, resistors, transformers, and switching units etc., are provided indoors in a building 26. This building eliminates or at least reduces the environmental hazards that could affect the operation of the high voltage plant 10. These effects include pollution and moisture that could have detrimental effects on the isolation of the different components, possibly causing interruption of the operation or even worse starting fires. However, the provision of indoor plants is accompanied by strict building regulations, particularly in earthquake zones of the world.

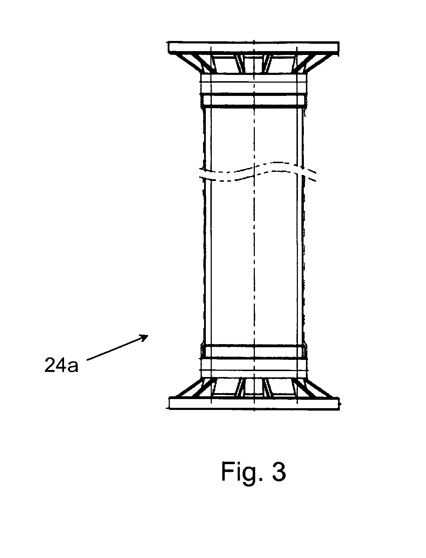

An example of a capacitor unit, such as an RI filter capacitor 24a, used in the above described high voltage plant is shown in Fig. 3. The capacitor is an oil-free dry capacitor constructed of tightly wound 0.01 µm layers of metal sprayed onto polypropylene plastic, which acts as the dielectric. Thus, the dry capacitor contains no impregnation fluids, solvents, paints or other hazardous chemicals. The dry capacitor has a hollow core through which forced cooling can be ducted to increase the capacity for applications where high energy density is required in a limited space. The metal layers are contained in a plastic housing.

The capacitor contains a number of capacitor cells or banks providing the required capacitor characteristics. Thus, The rated voltage of the high voltage dry capacitor determines its length, which in very high voltage applications, such as in 800 kV HVDC stations can be substantial.

By using oil-less capacitors provided indoors in the building 26, the fire hazard is decreased while also the detrimental effects of environmental hazards, such as pollution, are minimized.

A preferred embodiment of a high voltage plant according to the invention has been described. A person skilled in the art realizes that this could be varied within the scope of the appended claims. Thus, although a high voltage plant in an HVDC station has been described, it will be realized that the application of oil-less capacitors in other types of indoor plants is also possible.

## Claims

1. A high voltage plant comprising capacitors, inductors, transformers, and switching units for transmission of high voltage electrical power,
**characterized by**
- a building (26) in which the capacitors (20a, 22a, 24a), inductors (20b, 22b, 24b), resistors (20c, 22c, 24c), transformers (14), and switching units (16) are provided,
- wherein the capacitors are oil-less capacitors.

2. The high voltage plant according to claim 1, wherein the high voltage plant is a converter plant in an HVDC station.

3. The high voltage plant according to claim 1 or 2, wherein the rated voltage of the capacitors is at least 300 kV.

4. The high voltage plant according to any of claims 1-3, wherein the capacitors (20a, 22a, 24a) are part of a filter (20, 22, 24).

5. The high voltage plant according to claim 5, wherein the filter (20, 22, 24) is one of the following: harmonics filter, Power Line Carrier filter, or Radio Interference filter.

6. Use of an oil-less capacitor in a high voltage plant comprising capacitors, inductors, resistors, transformers, and switching units for transmission of high voltage electrical power, wherein the capacitors, inductors, transformers, and switching units are provided in a building (26).
